Europäisches Patentamt

(19) European Patent Office

Office européen des brevets

(11) Veröffentlichungsnummer: **0 071 938**
**B1**

# (12) EUROPÄISCHE PATENTSCHRIFT

(45) Veröffentlichungstag der Patentschrift.
04.02.87

(21) Anmeldenummer: 82106966.3

(22) Anmeldetag: 02.08.82

(51) Int. Cl.⁴: **B 29 C 49/72**

(54) Verfahren zum Entfernen eines Abfallteiles von einem Hohlkörper aus thermoplastischem Kunststoff.

(30) Priorität: 07.08.81 DE 3131391

(43) Veröffentlichungstag der Anmeldung:
16.02.83 Patentblatt 83/7

(45) Bekanntmachung des Hinweises auf die Patenterteilung:
04.02.87 Patentblatt 87/6

(84) Benannte Vertragsstaaten:
AT CH DE FR GB IT LI

(56) Entgegenhaltungen:
AT-B-362 575
DE-B-1 051 486
DE-B-2 206 842
US-A-3 277 754

(73) Patentinhaber: **Krupp- Kautex Maschinenbau
GmbH, D-5300 Bonn 3 (DE)**

(72) Erfinder: **Heinrich, Robert, Königswinterer Strasse
125, D-5300 Bonn 3 (DE)**

(74) Vertreter: **Koepsell, Helmut, Dipl.- Ing.,
Mittelstrasse 7, D-5000 Köln 1 (DE)**

## Beschreibung

Die Erfindung betrifft ein Verfahren zum Entfernen eines Abfallteiles von einem im Blasverfahren aus einem Zwischenerzeugnis hergestellten Hohlkörper aus thermoplastischem Kunststoff, welches Zwischenerzeugnis in einer mit Abquetschkanten versehenen, zwei- oder mehrteiligen Hohlform eingeschlossen wird, wobei beim Schließen der Hohlformteile Bereiche des Zwischenerzeugnisses unter Bildung wenigstens eines Abfallteiles, das über wenigstens einen entlang der Kontur des Hohlkörpers verlaufenden Steg relativ geringer Stärke mit dem Hohlkörper verbunden bleibt, abgequetscht und ggf. an den Abquetschstellen zugleich auch Bereiche des Zwischenerzeugnisses miteinander verschweißt werden und nach ausreichender Verfestigung des thermoplastischen Materials der Steg zur Entfernung des Abfallteiles mit einem Trennelement durchtrennt wird, welches zwischen der Wandung des Hohlkörpers und dem Abfallteil entlang dem Verlauf des Steges auf diesem zur Einwirkung gebracht wird.

Die Dicke des Steges hängt insbesondere von den Werkstoffeigenschaften, der Wandstärke des Zwischenerzeugnisses, vom Schliessdruck, mit dem die Hohlformteile gegeneinander gedrückt werden, und von der Ausgestaltung der Abquetschkanten an den Hohlformteilen ab. Die letztgenannte Einflussgrösse ist von besonderer Bedeutung, da überall dort, wo beim Abquetschvorgang an den Abquetschstellen zugleich auch Bereiche des Zwischenerzeugnisses miteinander verschweisst werden, im allgemeinen der Qualität der resultierenden Schweissverbindung eine wesentlich grössere Bedeutung zukommt als der Möglichkeit, den Steg auf möglichst einfache Weise durchtrennen zu können, um das Abfallteil zu entfernen. In jedem Fall jedoch ist die Stärke des Steges erheblich geringer als die Wandstärke der benachbarten Teile, also des Hohlkörpers einerseits und des Abfallteiles andererseits. Der Steg stellt somit eine Linie oder Zone geringer Festigkeit dar, die zwangsläufig entlang der oder eines Teiles der Aussenkontur des Hohlkörpers verläuft, die dem Verlauf der Abquetschkanten an den Hohlformteile entspricht.

Bei einfach geformten Hohlkörpern aus allgemein üblichem Werkstoff, z. B. einem Polyolefin, ist es im allgemeinen möglich, die für die Stärke des Verbindungssteges wesentlichen Einflussgrössen so aufeinander abzustimmen, dass als Steg nur ein dünner Materialfilm verbleibt, der von Hand oder mittels maschineller Einrichtungen durchgerissen werden kann, ohne dass die am Hohlkörper verbleibenden geringfügigen Reste dieses Filmes das Aussehen des Hohlkörpers beeinträchtigen. Es ist somit möglich, die Abfallteile durch einfaches Abreissen zu entfernen. Dies kann von Hand oder auch mittels maschineller Einrichtungen geschehen. Typische Anwendungsfälle sind im Extrusions-Blasverfahren hergestellte Flaschen und ähnliche Behälter aus thermoplastischem Kunststoff, bei denen überwiegend lediglich am Boden und am Flaschenhals Abfallteile bei der Formgebung entstehen und nachträglich zu entfernen sind. Es werden jedoch zunehmend Hohlkörper aus thermoplastischem Kunststoff im Blasverfahren, insbesondere im Extrusions-Blasverfahren hergestellt, bei denen aufgrund ihrer mehr oder weniger komplizierten Gestalt und der hohen Qualitätsanforderungen ein Abreissen der in vielen Fällen sehr umfangreichen Abfallteile, die ggf. mehr als 50% des Gewichtes des Zwischenerzeugnisses ausmachen können, unmöglich ist, da der Abfallteil und Hohlkörper verbindende Steg dazu zu stark ist. Dies gilt insbesondere auch dann, wenn zähere Werkstoffe verarbeitet werden, die ein einfaches Abreissen ohnehin erschweren. Es ist bekannt, in solchen Fällen die Abfallteile durch einen oder mehrere Stanzvorgänge zu entfernen. Der damit verbundene Aufwand ist jedoch verhältnismässig gross, da einmal die Stanzmesser sehr genau entsprechend der Kontur des Hohlkörpers verlaufen müssen und zum anderen in erheblichem Masse verschleissen. Hinzu kommt, dass bei dreidimensionalem Verlauf des zu durchtrennenden Verbindungssteges das Stanzwerkzeug noch komplizierter wird, wobei in vielen Fällen mehr als ein Arbeitsgang notwendig ist, um das Abfallstück oder die Abfallstücke vom Hohlkörper abzutrennen. In jedem Fall ist eine starke mechanische Beanspruchung des Hohlkörpers unvermeidbar, die insbesondere bei dünnwandigen Hohlkörpern zu unzulässigen Verformungen oder anderen Beschädigungen führen kann.

Es ist weiterhin durch die AT-B-362,575 bei einem Verfahren der im Oberbegriff des Anspruchs 1 genannten Art bekannt, für das Abtrennen von Abfallteilen an im Blasverfahren hergestellten Fässern aus thermoplastischem Kunststoff ein Schneidwerkzeug zu verwenden. Dies setzt eine genaue und aufwendige Führung des Schneidwerkzeuges voraus. Dazu dient einmal einer der Schenkel einer das Abfallteil haltenden Zange. Zusätzlich sind Rollen oder andere Führungselemente vorgesehen, die sich an dem zu bearbeitenden Hohlkörper abstützen. Derartige Führungsmittel versagen jedenfalls dann, wenn der zu durchtrennende Steg einen dreidimensionalen Verlauf aufweist. Außerdem ist eine derartige Schneideinrichtung kompliziert und teuer.

Es ist ferner bekannt, zum Durchtrennen von Kunststoffmaterial einen beheizten Draht als Trennelement zu verwenden, wobei der Trennvorgang durch Schmelzen des Kunststoffes an der mit dem Draht jeweils in Berührung befindlichen Stelle bewirkt wird. Die Führungsmittel für einen derartigen beheizten Draht müßten jedoch so genau sein wie für ein Stanzwerkzeug oder ein Schneidwerkzeug. Eine ungenaue Führung, bei welcher der heiße Draht mit der Oberfläche des Hohlkörpers in Berührung käme, hätte zumindest eine Beeinträchtigung, wenn nicht eine Beschädigung der Oberfläche, zur Folge. Im übrigen wäre auch eine derartige Trenneinrichtung durch die für den Draht erforderlichen Zu- und Ableitungen für die elektrische Energie einigermaßen kompliziert.

Der Erfindung liegt die Aufgabe zugrunde, das Verfahren der einleitend beschriebenen Art so auszugestalten, daß die Nachteile bekannter Verfahren vermieden werden. Insbesondere wird angestrebt, mit einfachsten Mitteln auch kompliziert, insbesondere dreidimensional verlaufende Verbindungsstege durchtrennen zu können, ohne daß das Trennelement einem großen Verschleiß unterliegt. Es sollen keine besonderen Erfordernisse an die Führung zwischen zu bearbeitendem Hohlkörper und Trennelement zu stellen sein.

Zur Lösung dieser Aufgabe schlägt die Erfindung ausgehend von dem eingangs genannten Verfahren vor, daß ein unbeheizter stumpfer Draht als Trennelement verwendet wird, der unter unmittelbarer Führung durch Hohlkörper und Abfallteil im Stegbereich unter einem beliebigen, von 0 bzw. 180° abweichenden Winkel zum Längsverlauf des Steges relativ zu diesem bewegt wird. Zweckmäßigerweise wird ein Draht verwendet, dessen Breite nicht größer ist als die des Steges, so daß bei einem kreisförmigen Querschnitt des Drahtes dessen Durchmesser nicht größer ist als die Breite des Steges.

Im allgemeinen wird es vorteilhaft sein, zu bearbeitenden Hohlkörper einerseits und Trennelement andererseits so relativ zueinander zu führen, daß das Trennelement einen etwa rechtwinkligen Verlauf zum Steg einnimmt. Dies ist jedoch nicht unbedingt erforderlich. Vielmehr ist auch ein spitzwinkliger Verlauf des Trennelementes zum Steg ohne weiteres möglich, welche Tatsache das Durchtrennensolcher Stege erheblich erleichtert und vereinfacht, die einen dreidimensionalen Verlauf aufweisen. So kann die Längsachse des Drahtes mit einem Winkel von 120 - 160° zum Steg vverlaufend relativ zu diesem bewegt werden.

Die maximale Breite bzw. der maximale Durchmesser des Drahtes kann auch kleiner sein als die Breite des Steges. Die kleinste Querschnittsabmessung, also bei einem runden Draht der kleinste Durchmesser, ist so zu wählen, daß der Draht dick genug ist, um ein Eindringen in die Wandung des Hohlkörpers auszuschließen. Andererseits muß der Draht eine ausreichende Festigkeit aufweisen. In der Praxis haben sich Drahtstärken in der Größenordnung von 0,5 - 1,5 mm als sehr geeignet für die Durchführung des erfindungsgemäßen Verfahrens erwiesen. Im übrigen kann davon ausgegangen werden, daß auch bei einem sehr langen Steg, der z. B. dann vorhanden ist, wenn das Abfallteil den Hohlkörper ganz oder auf den größten Teil seines Umfanges umgibt, die Breite des Steges mehr oder weniger konstant ist.

Die Verwendung eines Drahtes als Trennelement erlaubt mit einfachen Mitteln eine saubere Abtrennung von Abfallteilen, ohne daß eine genaue Führung notwendig wäre, da aufgrund der Flexibilität des Drahtes dieser selbsttätig der Linie des geringsten Widerstandes, die durch den Verbindungssteg festgelegt ist, folgt. D. h., daß keine besonderen, der Kontur angepaßten Führungsmittel erforderlich sind, da der Draht, der keine Schneiden aufweist, selbsttätig dem Verlauf des Verbindungssteges folgt, solange die relative Führung zwischen Trennelement einerseits und Hohlkörper andererseits so genau ist, daß die Abweichungen das Ausmaß der flexiblen Formbarkeit des Drahtes nicht übersteigen. Tatsächlich kann die relative Führung zwischen Hohlkörper und Draht desto ungenauer werden, je loser der Draht eingespannt ist, da mit größerer Freiheit auch die Kompensationsmöglichkeit bei Ungenauigkeiten der Führung zunimmt. Dabei kann natürlich der Fall eintreten, daß der Draht im Zuge seiner Relativbewegung an Teilbereichen der Wandung des Hohlkörpers entlanggleitet. Es hat sich jedoch herausgestellt, daß dies zumindest bei der Mehrzahl der in Frage kommenden Materialien ohne Bedeutung ist, da ein solches Entlanggleiten der relativ glatten, keine Rauhigkeiten aufweisenden Oberfläche des Drahtes auf der Oberfläche des Hohlkörpers keine Spuren hinterläßt, die dessen Funktion oder Aussehen beeinträchtigen könnten.

Bei vielen Kunststoffen, insbesondere Polyolefinen, ist es im allgemeinen vorteilhaft, den Trennvorgang kurz nach der Entnahme des Hohlkörpers aus der Blasform durchzuführen, wenn das thermoplastische Material zwar bereits vollständig verfestigt, unter Umständen jedoch noch nicht vollständig bis auf die Umgebungstemperatur abgekühlt ist. Dann läßt sich der Abtrennvorgang in besonders einfacher Weise, insbesondere unter geringer Kraftanwendung, durchführen. Dies mag möglicherweise seinen Grund darin haben, daß zu diesem Zeitpunkt, also kurz nach Verfestigung des thermoplasatischen Kunststoffes, dieser noch nicht völlig auskristallisiert ist. Es sei jedoch ausdrücklich darauf hingewiesen, daß auch zu einem späteren Zeitpunkt, ggf. Wochen und Monate nach der Herstellung des Hohlkörpers, mit daran befindlichen Abfallteilen, das Trennverfahren in der vorbeschriebenen Weise ohne Schwierigkeiten durchgeführt werden kann. In allen Fällen gilt, daß durch den durch den Draht auf den Verbindungssteg ausgeübten Druck, der aufgrund der geringen Wandstärke des Steges zu einer verhältnismäßig hohen Flächepressung führt, der Steg durchtrennt wird, wobei dieser Druck durch die relative Bewegung zwischen Hohlkörper mit Steg und Abfallteil und dem Draht herbeigeführt wird.

Der Draht kann aus Metall, Kunststoff oder einem anderen geeigneten Material bestehen. Entscheidend ist, daß er so stumpf ist, daß ein Eindringen in die Wandung des Hohlkörpers ausgeschlossen bleibt.

Auch die für die Durchführung des Verfahrens erforderliche Vorrichtung kann außerordentlich einfach sein. So kann es ausreichen, einen Drahtabschnitt von entsprechender Länge, beispielsweise von 50 - 100 cm, zwischen die Enden eines entsprechend bemessenen und geformten Bügels einzuspannen, so daß sich die von einer Laubsäge bekannte Anordnung ergibt, wobei Länge des Drahtes und Abstand der beiden Schenkel des Bügels wesentlich bestimmt werden von der Größe des Hohlkörpers, der mit dieser Vorrichtung zu bearbeiten ist.

Die geringen Anforderungen an die Genauigkeit der relativen Führung des Drahtes zum zu bearbeitenden Hohlkörper ergeben sich unter anderem aus der Tatsache, daß es ohne weiteres möglich ist, den Hohlkörper von Hand gegenüber dem eingespannten Draht - oder auch umgekehrt - zu bewegen, da eine manuelle Handhabung zwangsläufig eine konturengenaue Führung ausschließt. Selbstverständlich sind auch mechanische Bewegungsvorrichtungen verwendbar, die nach den jeweils gegebenen Koordinaten Hohlkörper und Trennelement relativ zueinander bewegen.

In der Zeichnung sind zwei Ausführungsbeispiele der Erfindung dargestellt. Es zeigen:

Fig. 1 eine Vorrichtung zum Entfernen von Abfallteilen mit einem daran geführten Hohlkörper aus thermoplastischem Kunstoff mit einem umfangreichen Abfallteil in perspektivischer Ansicht,

Fig. 2 die dazugehörige Seitenansicht,

Fig. 3 einen Schnitt nach der Linie III-III der Fig. 2,

Fig. 3a eine der Fig. 3 entsprechende Ansicht einer anderen Ausführungsform,

Fig. 4 den mit IV bezeichneten Bereich der Fig. 3 in grösserem Maßstab.

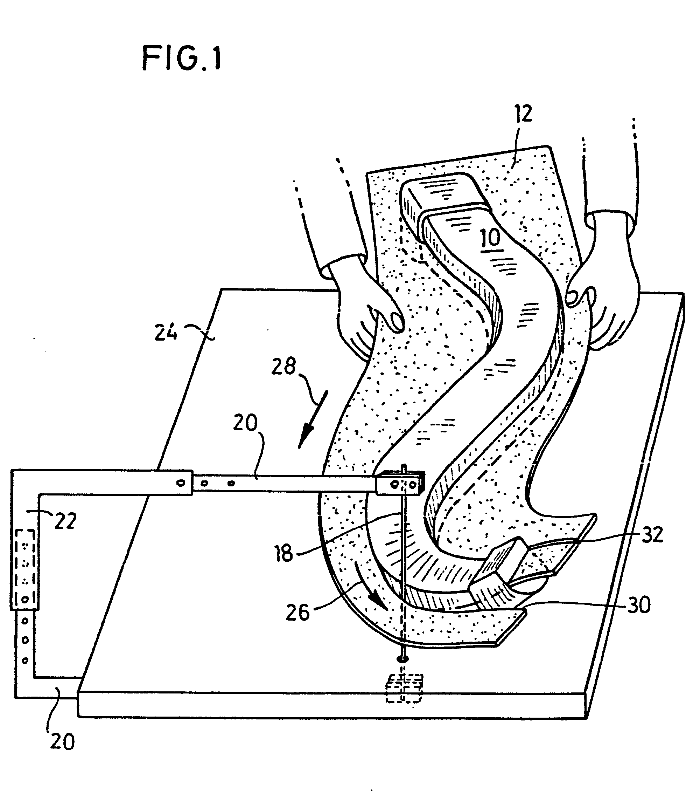

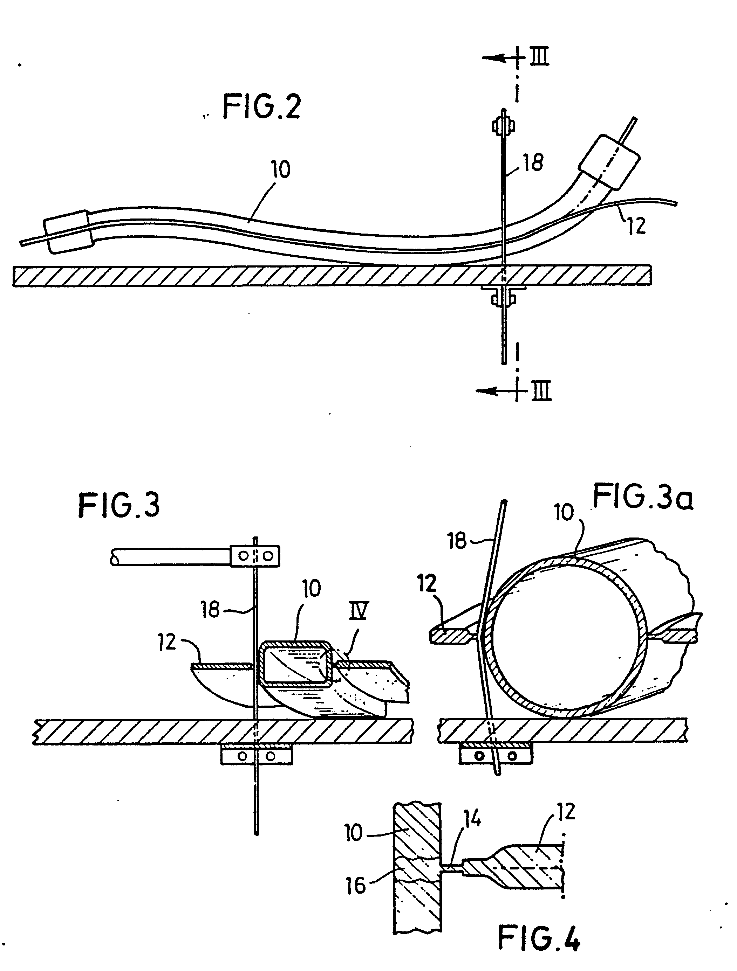

Bei dem in den Figuren 1 - 3 und 4 dargestellten Hohlkörper 10 handelt es sich um den Abschnitt eines Belüftungskanals oder dgl., wie er in Kraftfahrzeugen eingebaut wird. Derartige Hohlkörper werden im allgemeinen aus einem extrudierten, schlauchförmigen Vorformling hergestellt. Die Zeichnung lässt erkennen, dass das Abfallteil 12 praktisch den gesamten Hohlkörper umgibt und über einen Steg 14 (Fig. 4) vergleichsweise geringer Wandstärke nach dem Formgebungsvorgang mit dem Hohlkörper 10 verbunden bleibt. Dieser Steg wird normalerweise bei einem derartigen Hohlkörper zu dick sein als dass er ohne weiteres durchgerissen werden könnte. Dies ist im wesentlichen darauf zurückzuführen, dass bei der Formung des Hohlkörpers 10 Bereiche des Zwischenerzeugnisses entlang der gesamten Kontur miteinander zu verschweissen waren, so dass in dem in Fig. 4 der Zeichnung bei 16 angedeuteten Bereich die Wandung des Hohlkörpers 10 umlaufend eine Schweissnaht aufweist, deren Qualität abhängig ist vom Abquetschvorgang. Die dabei zu berücksichtigenden fertigungstechnischen Erfordernisse schliessen es häufig aus, den Steg 14 so dünn zu machen, dass er, wie beispielsweise bei einer üblichen Flasche aus Kunststoff, einfach abgerissen werden könnte. Die Vorrichtung zum Abtrennen des Abfallteiles 12 besteht aus einem einfachen Drahtabschnitt 18, der zwischen den beiden Schenkeln 20 eines Bügels 22 eingespannt ist. Letzterer ist einem Tisch 24 zugeordnet, der während des Abtrennvorganges als Auflage für das zu behandelnde Werkstück 10, 12 dienen kann, welches beim dargestellten Ausführungsbeispiel von Hand so an den Drahtabschnitt 18 geführt wird, dass dieser an einer Stelle des Werkstückes 10, 12, an welcher der Steg 14 den Aussenrand des Werkstückes schneidet, gegen den Steg zur Anlage kommt. Ein auch von Hand ohne Schwierigkeit aufzubringender Druck des Steges gegen den Draht reicht aus, um ein Einrissen des Steges 14 durch den auf diesen einwirkenden Draht zu verursachen. Mit einigen Bewegungen ist es möglich, den Steg 14, der die gesamte Kontur des Hohlkörpers 10 umläuft, zu durchtrennen und so das Abfallteil 12 abzutrennen. Fig. 2 zeigt ein Zwischenstadium dieses Abtrennvorganges. Fig. 3 zeigt die Anordnung des Drahtes 18 zwischen Hohlkörper 10 und Abfallteil 12 im Bereich des Steges 14.

Die Zeichnung lässt erkennen, dass das Werkstück 10, 12 und damit auch der Steg 14 einen dreidimensionalen Verlauf aufweisen. Dies hat zwangsläufig zur Folge, dass, wenn das Werkstück nicht entsprechend nach oben oder nach unten verschwenkt wird, der Drahtabschnitt 18 unter einem spitzen Winkel zum Steg 14 bzw. zu einer daran anliegenden Tangente verläuft. Dies beeinträchtigt den Abtrennvorgang in keiner Weise. Die Grenzen, bis zu denen der Winkel abnehmen kann, werden von Fall zu Fall verschieden sein. Sie können durch einfache Versuche festgestellt werden.

Entsprechendes gilt auch für den gekrümmten Verlauf des Steges 14 in der Projektion auf eine horizontale Ebene. Unter Zugrundelegung der Darstellung der Fig. 1 wird es zweckmässig sein, an der Stelle, an welcher sich der Drahtabschnitt 18 befindet, das Werkstück 10, 12 etwa entsprechend dem Verlauf des Pfeiles 26 zu führen. Dies ist aber von Hand nicht mit grosser Genauigkeit möglich, so dass der Drahtabschnitt 18 insbesondere in diesem Bereich einen vom dargestellten linearen Verlauf etwas abweichenden Verlauf einnehmen wird. Es ist aber zur Erzielung des angestrebten Zweckes ohne weiteres ausreichend, wenn die das Werkstück 10, 12 gegenüber dem Drahtabschnitt 18 bewegende Person die Richtung des Verlaufs des Steges im Zuge der Durchführung der Bewegung nur ungefähr einhält, zumal die vom Draht ausgeübte Reaktionskraft auch dazu beiträgt, das Werkstück 10, 12 in einer dem Verlauf des Steges angenäherten Bahn zu führen. Es kann unter Umständen ausreichen, wenn die Bedienungsperson auf das Werkstück eine Kraft etwa in Richtung des Pfeiles 28 ausübt, also etwa parallel zum allgemeinen Längsverlauf des Werkstückes, ohne die genauen Konturen zu beachten. Die Bewegungen senkrecht zur Pfeilrichtung 28 werden zu einem Teil durch den Draht dem Werkstück 10, 12 bzw. der es haltenden Bedienungsperson aufgezwungen. Zum Teil werden auch die Differenzen zwischen der tatsächlichen Lage des Stegabschnittes, auf den der Draht jeweils zur Einwirkung kommt, und den Einspannpunkten des Drahtes durch eine Verformung desselben ausgeglichen, wobei der Draht natürlich auch entlang dem Hohlkörper 10 auf der Oberfläche desselben gleiten wird. Dies hat jedoch keine nachteiligen Folgen unter der Voraussetzung, dass der Draht stumpf genug ist, also einen ausreichend grossen Durchmesser aufweist.

Durch einfaches Drücken des Werkstückes 10, 12 gegen den Drahtabschnitt 18 kann so das Abfallteil 12 auf einfache Weise in kurzer Zeit abgetrennt werden. Bei dem in der Zeichnung dargestellten Ausführungsbeispiel ist der Draht 18 bei 30 in den durch den Steg 14 definierten Bereich zwischen Hohlkörper 10 und Abfallteil 12 eingedrungen. Es wird nach Umfahren der Kontur des Hohlkörpers 10 diesen Bereich bei 32 verlassen. Bei Passieren dieses Punktes ist das Abfallteil 12 völlig vom Hohlkörper 10 gelöst.

Bei umlaufendem Abfallteil und damit umlaufendem Steg ist es zweckmässig, dass eine Abquetschung bis zum äusseren Rand des Abfallteiles verläuft, damit an dieser Stelle 30 bzw. 32 das Trennelement angesetzt werden kann. Im anderen Fall wäre ein Anschneiden oder Ansägen des Abfallteiles von aussen bis zum Steg erforderlich.

Das Ausführungsbeispiel gemäss Fig. 3a entspricht im wesentlichen dem der Fig. 1 - 3 und 4. Es lässt jedoch erkennen, dass bei mehr oder weniger lose eingespanntem Draht 18 und nicht sehr genauer Führung der beiden Teile relativ zueinander der Draht 18 sich selbsttätig so einstellt, dass er im Bereich des Steges 14 liegt. Er liegt dabei an einem Abschnitt des Umfanges des im Querschnitt runden Hohlkörpers 10 an, so dass er während des Trennvorganges an diesem entlanggleitet. Eine Beschädigung des Hohlkörpers ist unter den genannten Voraussetzungen nicht zu befürchten. Trotz der Bewegungsfreiheit des Drahtes 18 bleibt dieser im Bereich des Steges 14, da dieser zwischen dem eigentlichen Hohlkörper 10 und dem Abfallteil 12 als Führung wirkt.

**Patentansprüche**

1. Verfahren zum Entfernen eines Abfallteiles (12) von einem im Blasverfahren aus einem Zwischenerzeugnis hergestellten Hohlkörper (10) aus thermoplastischem Kunststoff, welches Zwischenerzeugnis in einer mit Abquetschkanten versehenen, zwei- oder mehrteiligen Hohlform eingeschlossen wird, wobei beim Schließen der Hohlformteile Bereiche des Zwischenerzeugnisses unter Bildung wenigstens eines Abfallteiles (12), das über wenigstens einen entlang der Kontur des Hohlkörpers (10) verlaufenden Steg (14) relativ geringer Stärke mit dem Hohlkörper verbunden bleibt, abgequetscht und ggf. an den Abquetschkanten zugleich auch Bereiche des Zwischenerzeugnisses miteinander verschweißt werden und nach ausreichender Verfestigung des thermoplastischen Materials der Steg (14) zur Entfernung des Abfallteils (12) mit einem Trennelement durchtrennt wird, welches zwischen der Wandung des Hohlkörpers (10) und dem Abfallteil (12) entlang dem Verlauf des Steges (14) auf diesen zur Einwirkung gebracht wird, dadurch gekennzeichnet, daß ein unbeheizter stumpfer Draht (18) als Trennelement verwendet wird, der unter unmittelbarer Führung durch Hohlkörper (10) und Abfallteil (12) im Stegbereich unter einem beliebigen, von 0 bzw. 180° abweichenden Winkel zum Längsverlauf des Steges (14) relativ zu diesem bewegt wird.

2. Verfahren nach Anspruch 1, dadurch gekennzeichnet, daß ein Draht (18) verwendet wird, dessen Breite nicht größer ist als die des Steges (14).

3. Verfahren nach Anspruch 1 oder 2, dadurch gekennzeichnet, daß die Längsachse des Drahtes (18) mit einem Winkel von 120 - 160° zum Steg verlaufend relativ zu diesem bewegt wird.

4. Verfahren nach einem der Ansprüche 1 - 3, dadurch gekennzeichnet, daß der Durchmesser des verwendeten Drahtes (18) kleiner ist als die Breite des Steges (14).

5. Verfahren nach einem der Ansprüche 1 - 4, dadurch gekennzeichnet, daß der verwendete Draht (18) eine Stärke von von 0,5 - 1,5 mm aufweist.

**Claims**

1. A method of removing a waste portion (12) from a hollow body (10) of thermoplastic material which is produced in a blowing process from an intermediate product which is enclosed in a hollow mould which is in two or more parts and which is provided with squeezing-off edges, wherein when the hollow mould parts are closed, regions of the intermediate product are squeezed off, forming at least one waste portion (12) which remains joined to the hollow body by way of at least one web (14) of relatively small thickness which extends along the contour of the hollow body (10), and at the same time regions of the intermediate product may possibly also be welded together at the squeezing-off edges and, after the thermoplastic material has set sufficiently, the web (14) is severed with a severing element to remove the waste portion (12), the severing element being caused to act on the web between the wall of the hollow body (10) and the waste portion (12), along the course of the web (14), characterised in that the severing element used is an unheated blunt wire (18) which, being guided directly by the hollow body (10) and the waste portion (12) in the region of the web (14) is moved relative to the web (14) at any angle differing from 0 or 180° with respect to the longitudinal course of the web (14).

2. A method according to claim 1 characterised by using a wire (18), the width of which is no greater than that of the web (14).

3. A method according to claim 1 or claim 2 characterised in that the longitudinal axis of the wire (18) is moved relative to the web, extending at an angle of 120 to 160° with respect to the web.

4. A method according to one of claims 1 to 3 characterised in that the diameter of the wire (18) used is smaller than the width of the web (14).

5. A method according to one of claims 1 to 4 characterised in that the wire (18) used is of a gauge of 0.5 to 1.5 mm.

## Revendications

1) Procédé pour séparer une bavure (12) d'un corps creux (10), en matière thermoplastique, réalisé par soufflage à partir d'un demi-produit qu'on enferme dans un moule creux comportant au moins deux parties pourvues de bords d'écrasement, la fermeture des parties de ce moule creux entraînant l'écrasement de certaines zones du demi-produit et la formation d'au moins une bavure (12) à enlever ultérieurement, qui est reliée au corps creux (10) par au moins une languette intermédiaire (14) de moindre épaisseur qui entoure le corps creux, des parties de demi-produit se trouvant ainsi soudées l'une à l'autre, au droit des bords d'écrasement du moule et l'enlèvement de la bavure (12) étant ensuite réalisé, après un durcissement suffisant de la matière plastique, en sectionnant la languette de liaison (14), au moyen d'un élément approprié que l'on fait passer à cet effet entre la paroi du corps creux (10) et la bavure (12) à enlever, en suivant le trajet de ladite languette de liaison, procédé caractérisé en ce qu'on utilise pour sectionner la languette (34) un élément constitue par un fil (18) sans aspérités et non chauffé et en ce qu'on agit directement sur le corps creux (10) et sur la bavure (12) à enlever, pour assurer le guidage et le cheminement du fil de découpage (18) dans la zone de la languette de liaison (14) en suivant longitudinalement cette languette grâce à des déplacements du corps creux (10), avec la bavure (12) qui lui est associée, dans la direction de l'axe longitudinal de la languette de liaison (14), ou à 180 degrés de cette direction.

2) Procédé selon la revendication 1, caractérisé en ce qu'on utilise un fil (18) dont la largeur n'excède pas celle de la languette de liaison (14).

3) Procédé selon l'une des revendications 1 ou 2, caractérisé, en ce qu'on fait avancer le fil de découpage (18) dans la languette de liaison (14) de manière telle que l'axe longitudinal du fil (18) ait une obliquité de 120 à 160 degrés par rapport à la languette (14).

4) Procédé selon l'une des revendications 1 à 3, caractérisé en ce que le diamètre du fil de découpage (18) que l'on utilise est plus faible que la largeur de la languette de liaison (14).

5) Procédé selon l'une des revendications 1 à 4, caractérisé en ce qu'on utilise un fil de découpage (18) ayant un calibre compris entre 0,5 et 1,5 mm.

# FIG.1

FIG.2

FIG.3

FIG.3a

FIG.4